# EUROPÄISCHE PATENTANMELDUNG

(11) **EP 1 752 329 A2**
(43) Veröffentlichungstag der Anmeldung: **14.02.2007**
(21) Anmeldenummer: 06014631.3
(22) Anmeldetag: 14.07.2006
(51) Int. Cl.: B60K 11/04

(54) **Lagerung für einen Kühler**

(30) Priorität: 10.08.2005 DE 102005037912
(71) Anmelder: AUDI AG, 85045 Ingolstadt (DE)
(72) Erfinder: Köhnlein, Oliver, 85411 Hohenkammer (DE); Günthner, Robert-Johann, 85080 Gaimersheim (DE)
(74) Vertreter: Engelhardt, Harald

(57) **Zusammenfassung**

Eine Lagerung für einen Kühler (11) in einer Fahrzeugfront weist ein Lagerteil (17) mit einem nach vorne weisenden Fortsatz (19) auf, welcher derart an einem ihn aufnehmenden Karosseriebauteil (23) befestigt ist, dass bei einer ausreichend großen Krafteinwirkung auf den Fortsatz (19) sich das Lagerteil (17) von dem Karosseriebauteil (23) löst und den Kühler verschwenkend nach hinten verschoben wird.

## Beschreibung

Die Erfindung bezieht sich auf eine Lagerung für einen Kühler in einer Fahrzeugfront, wobei der Kühler in seinem unteren Randbereich an mindestens einer Stelle über ein Lagerteil an einem Karosseriebauteil befestigt ist und die Befestigungsstelle in einer Ebene tiefer als die Ebene eines Stoßfängers für das Fahrzeug verläuft.

Es ist bereits bekannt, den Kühler eines Kraftfahrzeuges so anzuordnen und zu befestigen, dass er bei einem Frontaufprall ab einer bestimmten Größenordnung verschwenkt wird. Dadurch lässt sich bei einem Aufprall mit verhältnismäßig geringer Geschwindigkeit eine Beschädigung des Kühlers oder anschließender Bauteile vermeiden bzw. verringern.

Dazu ist es aus der DE 102 60 171 A1 bekannt, zwischen einem vorderen Stoßfängerquerträger und dem Kühler ein Deformationselement anzuordnen, wobei der Kühler mit beim Aufprall vom Stoßfängerquerträger entkoppelbaren Bauteilen verbunden ist und wobei hinter dem Kühler ein Freiraum ohne verformungssteife Komponenten vorgesehen ist, welcher eine begrenzte Bewegung des Kühlers nach hinten ermöglicht.

Die DE 20 2004 011 632 U1 zeigt und beschreibt eine Befestigungsvorrichtung für einen Kühler mit einem unteren Haltezapfen, welcher so in einem Aufnahmeteil gehalten ist, dass er über ein anschließendes Langloch verschoben wird, wenn entsprechende Kräfte auf den Kühler einwirken.

Die bekannten Anordnungen haben den Nachteil, dass entweder die Kühlerbewegung mit der Bewegung des Stoßfängerquerträgers gekoppelt ist oder dass der Kühler nur verschwenkt, wenn eine Kraft unmittelbar auf ihn einwirkt.

Der vorliegenden Erfindung liegt die Aufgabe zugrunde, mit einfachen Mitteln die Voraussetzung dafür zu schaffen, dass die Kühlerverschwenkung unabhängig von der Höhe oder dem Vorhandensein eines Stoßfängerquerträgers oder überhaupt eines Stoßfängers geschieht und dass der Kühler nicht unmittelbar getroffen werden muss, um seine Schwenkbewegung einzuleiten.

Die Aufgabe wird dadurch gelöst, dass das Lagerteil für den Kühler einen nach vorne weisenden Fortsatz aufweist und das Lagerteil derart befestigt ist, dass bei einer ausreichend großen Krafteinwirkung auf den Fortsatz sich das Lagerteil von dem Karosseriebauteil löst und nach hinten verschoben wird, wodurch gleichzeitig der Kühler verschwenkt wird.

Der Fortsatz an dem Lagerteil bewirkt, dass bei einem Aufprall die Lagerstelle des Kühlers und damit der Kühler nach hinten verschoben wird, ohne dass der Kühler unmittelbar getroffen wird. Insofern kann man von einem verschiebbaren Kühlerlager sprechen. Es wird also anders als beim Gegenstand der DE 20 2004 011 632 U1 nicht der Kühler in dem Lager verschoben, sondern das Lager zusammen mit dem Kühler.

Der Fortsatz an dem Lagerteil hat darüber hinaus den Vorteil, dass er unabhängig von der Kühlerlage in einen Bereich geführt werden kann, in den bei einem Anstoß der Kühler verschwenkt werden soll. Dies ist etwa entscheidend, wenn das Fahrzeug auf ein sehr niedriges Hindernis, bspw. auf eine niedrige Steinsäule, auffährt. Dabei zeigt sich, dass die Entkoppelung der Kühlerverschwenkung vom Stoßfängersystem besonders vorteilhaft ist. Es sind nämlich viele Fälle denkbar, bei denen zwar eine Verschiebung des Stoßfängerquerträgers sinnvoll, jedoch ein Verschwenken des Kühlers entbehrlich ist. Ergänzend ist anzumerken, dass die vorgeschlagene neue Lagerung des Kühlers völlig unabhängig von den sonstigen Aufbauten ist, insbesondere von der Ausgestaltung und Höhe des Stoßfängersystems. Das Vorhandensein eines Stoßfängers ist keine Voraussetzung für einen Einsatz der erfindungsgemäßen Kühlerlagerung.

Gemäß einer vorteilhaften Ausgestaltung der Erfindung kann das Lagerteil ein Kunststoffteil sein und Halteelemente aufweisen, welche bei Beginn der Verschiebebewegung des Lagerteils wegbrechen. Ein solches Kunststoff-Lagerteil kann sehr kostengünstig hergestellt werden. Es wird auch im Rahmen der erfindungsgemäßen Lagerung des Kühlers voll seinen Aufgaben gerecht und kann ohne zusätzliche Befestigungselemente montiert werden. Zu seiner Festlegung ist es ausreichend, wenn formschlüssige Eingriffe vorhanden sind oder Rastelemente Verwendung finden. Alle diese Befestigungseinrichtungen können in einfacher Weise so ausgestaltet werden, dass sie ab einer bestimmten Kraftbeaufschlagung wegbrechen. Auch der erfindungsgemäß an dem Lagerteil angeformte Fortsatz kann durch Verstrebungen oder Rippen so ausgestaltet werden, dass er auf jeden Fall die auftretenden Kräfte zum Verschwenken des Kühlers übertragen kann.

Der Kühler selbst kann in dem Lagerteil durch an sich bekannte Maßnahmen, bspw. durch einen Gummipuffer, aufgenommen sein.

Da es in vielen Fällen ausreichend ist, den Kühler bei einem Aufprall um wenige Grad nach hinten zu verschwenken, ist es meist nicht erforderlich, die oberen Befestigungspunkte, die gewissermaßen die Schwenkachse bilden, für diesen Zweck besonders auszubilden.

Ein Ausführungsbeispiel der Erfindung ist in der Zeichnung dargestellt und wird nachfolgend näher beschrieben. Es zeigen
- Figur 1: als Prinzipbild in Seitenansicht einen Kühler und dessen Lagerung sowie ein Stoßfängersystem,
- Figur 2: in perspektivischer Darstellung die Lagerung aus Figur 1 des Kühlers und
- Figur 3: eine Darstellung ähnlich der Darstellung in Figur 2 jedoch ohne eingesetzten Kühler.

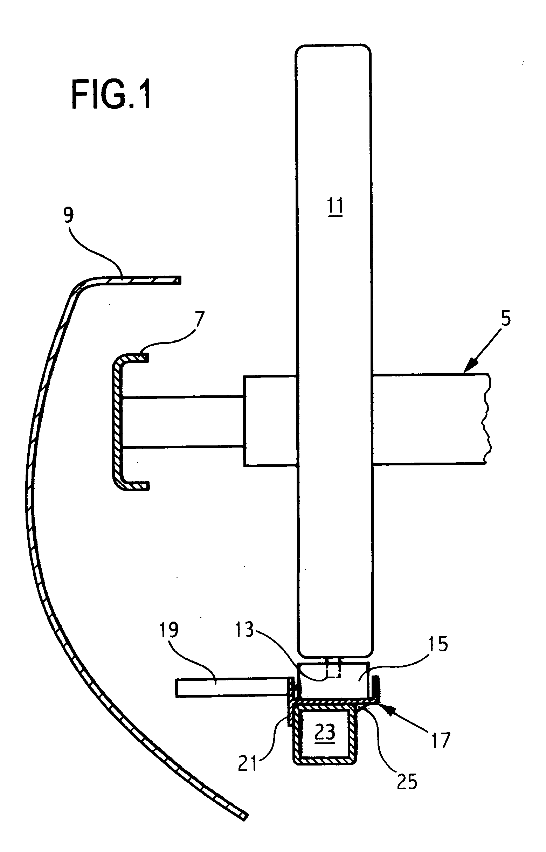

Figur 1 zeigt als Prinzipbild in Seitenansicht ein Stoßfängersystem 5 mit einem Stoßfängerquerträger 7 und einem Stoßfängerüberzug 9. Zu dem Stoßfängerquerträger 7 zurückversetzt ist ein Kühler 11 angeordnet.

Zu seiner Lagerung ist der Kühler 11 mit unteren Zapfen 13 versehen, welche jeweils von einer Gummibuchse 15 aufgenommen werden. Die Gummibuchse 15 ist ihrerseits von einem Lagerteil 17 umschlossen, an dem einstückig ein nach vorne weisender Fortsatz 19 angeformt ist. Zu seiner Festlegung sind an dem Lagerteil 17 vordere Laschen 21 vorgesehen, welche sich an der Vorderseite eines das Lagerteil 17 tragenden Karosseriebauteiles 23 anlegen. Im vorliegenden Fall wird das Karosseriebauteil 23 durch einen in Fahrzeugquerrichtung verlaufenden unteren Träger eines Frontendes gebildet. Außerdem sind zur Festlegung des Lagerteiles 17 noch Rasten 25 angeformt, welche ebenfalls mit dem Karosseriebauteil 23 zusammenwirken und dafür Sorge tragen, dass das Lagerteil 17 in Fahrzeuglängsrichtung fixiert ist.

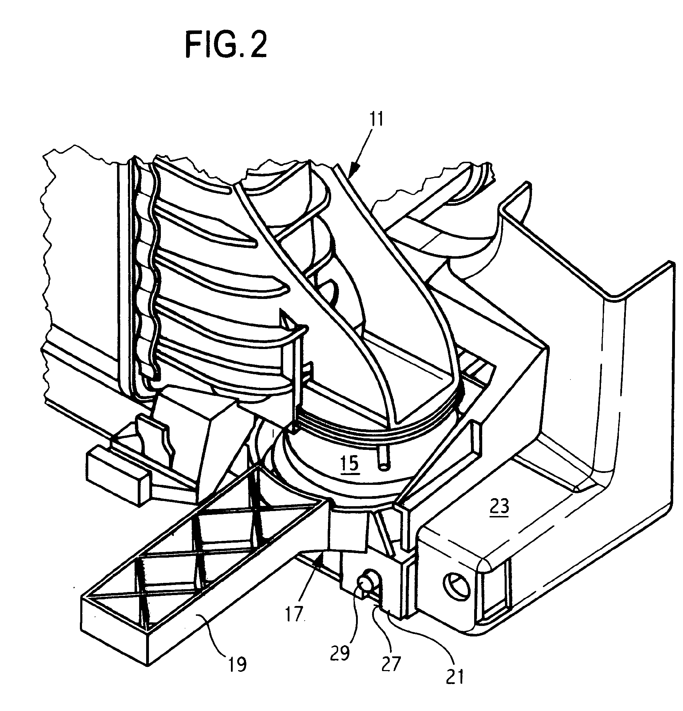

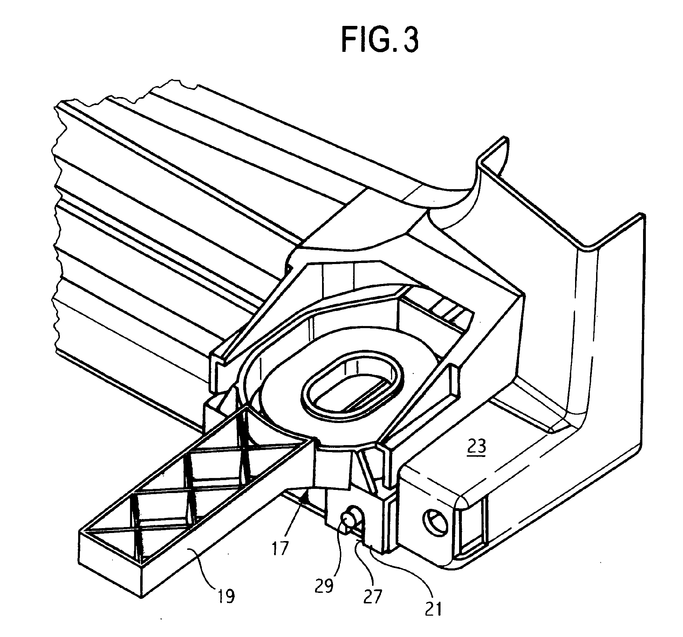

Die Figuren 2 und 3 lassen eine der beiden Laschen 21 näher erkennen. So ist in der Lasche 21 eine Aussparung 27 vorgesehen, in die ein Stift 29 eingreift, um das Lagerteil 17 in Fahrzeugquerrichtung zu fixieren.

Wenn auf den Fortsatz 19 aufprallbedingt eine ausreichend große Kraft einwirkt, brechen die Laschen 21 ab und das Lagerteil 17 wird zusammen mit dem von ihm aufgenommenen Kühler 11 nach hinten verschoben. Die mögliche Verschiebebewegung entspricht in etwa der Länge des Fortsatzes 19. Bei einem größeren Aufprall kommt es zu keiner Relativverschiebung zwischen dem Lagerteil 17 und dem Karosseriebauteil 23; es werden vielmehr beide Bauteile zusammen nach hinten verschoben.

Ist der Aufprall jedoch nicht so heftig, dann verbleibt das Karosseriebauteil 23 in seiner Position und zur Reparatur müssen nur das oder die Lagerteile 17 erneuert werden.

## Patentansprüche

1. Lagerung für einen Kühler in einer Fahrzeugfront, wobei der Kühler in seinem unteren Randbereich an mindestens einer Stelle über ein Lagerteil an einem Karosseriebauteil befestigt ist und die Befestigungsstelle in einer Ebene tiefer als die Ebene eines Stoßfängers für das Fahrzeug verläuft, **dadurch gekennzeichnet, dass** das Lagerteil (17) einen nach vorne weisenden Fortsatz (19) aufweist und derart an dem Karosseriebauteil (23) befestigt ist, dass bei einer ausreichend großen Krafteinwirkung auf den Fortsatz (19) sich das Lagerteil (17) von dem Karosseriebauteil (23) löst und den Kühler (11) verschwenkend nach hinten verschoben wird.

2. Lagerung nach Anspruch 1, **dadurch gekennzeichnet, dass** das Lagerteil (17) ein Kunststoffteil ist und Halteelemente (21, 25) aufweist, welche bei Beginn der Verschiebebewegung des Lagerteils (17) wegbrechen.
